# FASCICULE DE BREVET EUROPEEN

(11) **EP 3 523 957 B1**
(45) Date de publication et mention de la délivrance du brevet: **29.07.2020**
(21) Numéro de dépôt: 17777917.0
(22) Date de dépôt: 05.10.2017
(51) Int. Cl.: H04N 5/33, G02B 7/00, G02B 13/14

(54) **SYSTEME D'IMAGERIE IR A ZOOM CONTINU GC-PC DOTE D'UNE CONFIGURATION TPC**
INFRAROT KAMERA MIT KONTINUIRLICHER OPTISCHER VERGRÖSSERUNG UND EINGEBAUTER ERWEITERUNG
INFRARED CAMERA WITH CONTINUOUS OPTICAL ZOOM AND INCORPORATED EXTENDER

(30) Priorité: 06.10.2016 FR 1601451
(43) Date de publication de la demande: 14.08.2019
(73) Titulaire: Thales, 92400 Courbevoie (FR)
(72) Inventeur: FORESTIER, Bertrand, 78283 Guyancourt Cedex (FR)
(74) Mandataire: Bréda, Jean-Marc
(86) Numéro de dépôt international: PCT/EP2017/075306
(87) Numéro de publication internationale: WO 2018/065508

(56) Documents cités:
- CN-U- 205 581 385
- JP-A- H04 367 808
- US-A1- 2010 177 195

## Description

Le domaine de l'invention est celui d'un système d'imagerie passive infrarouge comme par exemple les caméras et jumelles thermiques, fonctionnant dans la bande MWIR (3-5 µm) et/ou dans la bande LWIR (8-12 µm), utilisant un détecteur refroidi et un dispositif opto-mécanique de formation d'image à focale variable aussi désigné zoom optique.

Afin d'optimiser la portée, le coût et l'ergonomie d'un tel système, on souhaite disposer d'un zoom continu Grand Champ (GC) - Petit Champ (PC) doté d'une configuration Très Petit Champ (TPC) optique, avec un rapport PC/TPC de la classe 1.5, sans que la configuration TPC n'alourdisse, n'encombre ni ne renchérisse le système.

Il existe actuellement des zooms IR continus mono-ouverture et sans flux de structure.

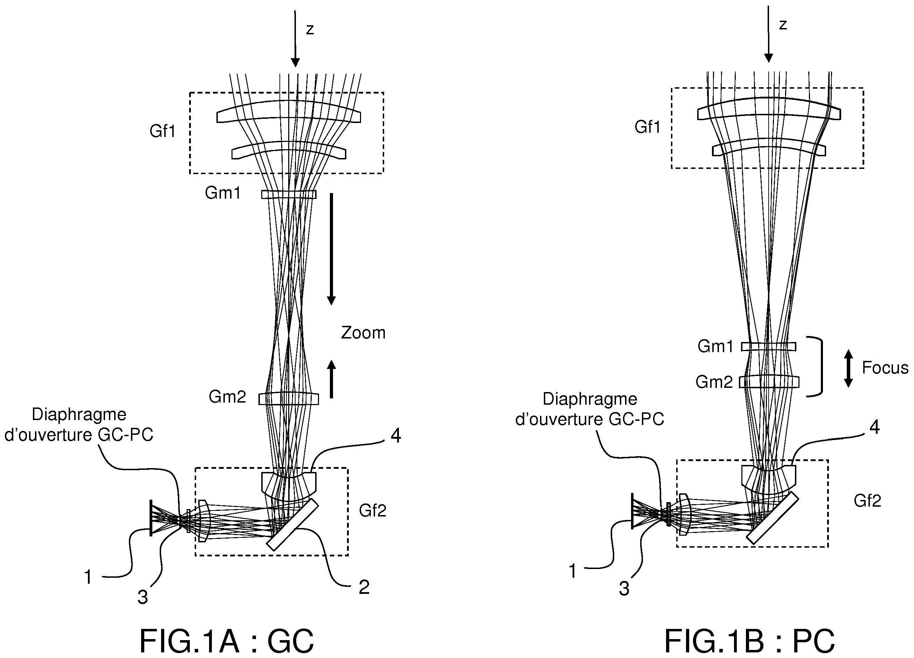

De tels zooms continus GC-PC de rapport moyen (typiquement de l'ordre de 6) équipent actuellement des systèmes IR du marché, comme par exemple les jumelles Sophie ZS ou Sophie XF de THALES Optronique. Classiquement, un tel zoom montré figures 1A et 1B, comprend dans l'ordre sur l'axe optique z du système :
- Un groupe de tête fixe Gf1 de focale F1, de type téléobjectif (a priori).
- Un groupe mobile Gm1 divergent jouant le rôle de variateur, qui travaille avec un grandissement gm1 variable, négatif.
- Un groupe mobile Gm2 convergent jouant le rôle de compensateur, qui travaille avec un grandissement gm2 variable, négatif également.
- Un groupe fixe Gf2 relayant jusqu'au détecteur l'image intermédiaire réelle délivrée par les trois groupes Gf1, Gm1 et Gm2. Le groupe Gf2 travaille avec un grandissement gf2 constant et négatif qui est généralement compris entre -2 et -1.

Un miroir de repli 2 est disposé dans le groupe Gf2 pour optimiser l'encombrement.

La pupille de sortie du système coïncide avec le diaphragme froid 3 du détecteur 1, qui joue le rôle de diaphragme d'ouverture du zoom sur la plage continue GC-PC. A l'aide d'une lentille de champ 4 généralement présente dans le groupe Gf2, il est possible de contraindre la position et les aberrations de la pupille d'entrée du PC, afin de minimiser les diamètres des composants du groupe de tête Gf1, qui pèsent significativement sur le coût de l'optique. En GC, le plus souvent la pupille d'entrée est virtuelle et l'on fait en sorte que les faisceaux restent à l'intérieur de l'enveloppe des faisceaux utiles PC.

La focale F du zoom a pour expression F = F1. gm1. gm2. gf2. La variation de focale, autrement dit l'effet de zoom, est due aux variations du produit gm1 . gm2, qui est minimum en GC et maximum en PC.

L'ensemble est optimisé de sorte qu'en PC, la valeur absolue de gm2 (aussi notée Igm2l) reste inférieure à environ 0.85. On sait que cette condition rend possible l'utilisation du compensateur (Gm2) en tant que groupe de focalisation pour la totalité de la plage continue GC-PC. En effet, la sensibilité axiale du compensateur Gm2, qui relie la défocalisation de l'image au déplacement axial de celui-ci, a pour expression (1-(gm2)²)(gf2)².

Par conséquent, si Igm2l est suffisamment éloignée de 1.0, alors un petit déplacement axial du tandem induit une défocalisation de l'image; autrement dit Gm2 peut jouer le rôle de groupe de focalisation rapprochée ou peut servir à compenser les dérives thermiques de la combinaison.

De même, si le produit gm1. gm2 reste inférieur à environ 0.85 en configuration PC, alors il est possible d'utiliser le tandem Gm1-Gm2 comme groupe de focalisation sur la totalité de la plage GC-PC.

Bien évidemment, avec ce type d'architecture optique il est possible d'obtenir un zoom continu de rapport plus important, afin de couvrir un besoin GC-TPC. Grosso-modo, le diamètre des composants de tête est alors multiplié par un facteur égal au rapport PC/TPC, ce qui a un impact important sur l'encombrement et le coût de l'équipement.

Une autre solution connue consiste à utiliser un zoom infrarouge GC-TPC bi-ouverture, sans flux de structure. On a vu que l'allongement de la focale d'un zoom pour obtenir un TPC s'accompagne naturellement d'une augmentation du diamètre utile des composants de tête, et par conséquent d'un surcoût. Néanmoins, il est possible de limiter le diamètre de la lentille frontale (lentille de tête du groupe de tête) tout en garantissant un comportement photométrique parfaitement sain. Pour cela, on réduit l'ouverture utile en TPC en insérant devant le cryostat un diaphragme bordé par un miroir de réduction de flux de structure. Un tel dispositif est décrit plus précisément dans le §5 de l'article de J. Vizgaitis : Dual F/number optics for 3rd generation FLIR systems, Proc. Of SPIE Vol. 5783. On le retrouve par exemple dans la caméra ATTICA M-ER de la société AIRBUS Defence & Space, qui est décrite dans l'article « New Thermal Imager for Long Range Surveillance » de J. Fritze & H. Schlemmer, AMA Conferences 2013. Une telle solution ne répond que partiellement au problème posé dans la mesure où elle fait appel à un mécanisme dédié à la commutation du diaphragme d'ouverture TPC, ce qui n'est manifestement pas très économique.

On peut aussi ajouter un afocal TPC devant un zoom GC-PC. En effet, pour obtenir un TPC à partir d'un zoom GC-PC, il suffit de monter un module afocal de grossissement PC/TPC devant le groupe de tête du zoom. Ce faisant, le GC est également réduit d'un facteur PC/TPC. Un tel afocal, de type galiléen, comporte au moins deux composants IR de grand diamètre, a priori onéreux. Cette solution ne répond absolument pas au problème posé, ni en termes de masse et d'encombrement, ni en termes de coût, ni en termes d'ergonomie.

Le document US 2010/0177195 A1 publié le 15 juillet 2010, décrit une caméra infrarouge refroidie avec un zoom continu Grand Champ - Petit Champ.

En conséquence, il demeure à ce jour un besoin pour un système d'imagerie IR donnant simultanément satisfaction à l'ensemble des exigences précitées, en termes de masse, d'encombrement, de coût, et d'ergonomie.

Le système selon l'invention utilise un zoom infrarouge à deux groupes mobiles, à plage continue GC-PC et doté d'une configuration supplémentaire TPC. Ce zoom a les caractéristiques suivantes :
- La plage continue fonctionne de façon classique, son diaphragme d'ouverture étant confondu avec l'écran froid du cryostat.
- La configuration TPC, originale, fonctionne avec une ouverture numérique utile plus petite que celle de la plage GC-PC et avec une proportion relativement importante de flux de structure, car celui-ci n'est pas réduit. Le diaphragme d'ouverture du TPC est formé par l'appui d'une des lentilles du groupe de tête du zoom, et est imagé au voisinage de l'écran froid. Il n'y a pas de mécanisme dédié au changement d'ouverture.

Plus précisément l'invention a pour objet un système d'imagerie passive IR tel que revendiqué à la revendication 1.

Le système d'imagerie selon l'invention est ainsi équipé d'un zoom continu GC-PC à pupille froide, doté d'une configuration supplémentaire TPC fonctionnant à ouverture réduite avec une pupille chaude matérialisée dans le groupe de tête et imagée au voisinage de la pupille froide du zoom continu.

Le zoom comporte deux groupes mobiles assurant à la fois le changement de champ et la focalisation de l'image sur le détecteur.

Le zoom est essentiellement dimensionné pour la fonction continue GC-PC, et il n'y a pas de mécanisme ni de module opto-mécanique exclusivement dédié au TPC.

Les composants optiques ne sont pas surdimensionnés pour les besoins de la fonction TPC.

Le TPC ne contraint pas davantage les mécanismes variateur et compensateur que le zoom GC-PC ; en particulier, il n'est pas nécessaire d'améliorer leurs résolutions pour le TPC.

Des modes de réalisation particuliers sont définis dans les revendications dépendantes.

Selon un premier mode de réalisation, les deux groupes mobiles sont adjacents, le premier est divergent avec un grandissement variable négatif, et le second convergent avec un grandissement variable négatif également. Lorsque la configuration GC correspond à 20°, la configuration PC à 3°, et la configuration TPC à 2°, le produit des grandissements des premier et second groupes mobiles est typiquement supérieur à 1.2 en configuration TPC, compris entre 0.8 et 0.85 en configuration PC, et supérieur à 0.12 en configuration GC.

Selon un deuxième mode de réalisation, le système d'imagerie comporte un groupe supplémentaire fixe convergent à grandissement variable et négatif, situé entre les deux groupes mobiles divergents qui ont un grandissement variable négatif. Lorsque la configuration GC correspond à 20°, la configuration PC à 3°, et la configuration TPC à 2°, le groupe de transport d'image travaille avec un grandissement constant de faible valeur absolue, typiquement inférieure à 0.1.

L'invention a aussi pour objet une caméra IR refroidie ou des jumelles IR refroidies qui comportent un système d'imagerie passive IR tel que décrit.

D'autres caractéristiques et avantages de l'invention apparaîtront à la lecture de la description détaillée qui suit, faite à titre d'exemple non limitatif et en référence aux dessins annexés dans lesquels :
les figures 1 déjà décrites représentent schématiquement vu en coupe un système d'imagerie IR selon l'état de la technique, en configuration GC (fig 1a) et PC (fig 1b),
les figures 2 représentent schématiquement vu en coupe un premier exemple de système d'imagerie IR selon l'invention, en configuration GC (fig 2a), PC (fig 2b) et TPC (fig 2c),
les figures 3 représentent schématiquement vu en coupe un deuxième exemple de système d'imagerie IR selon l'invention, en configuration GC (fig 3a), PC (fig 3b) et TPC (fig 3c),
la figure 4 représente un exemple de mécanique de maintien du groupe de tête.

D'une figure à l'autre, les mêmes éléments sont repérés par les mêmes références.

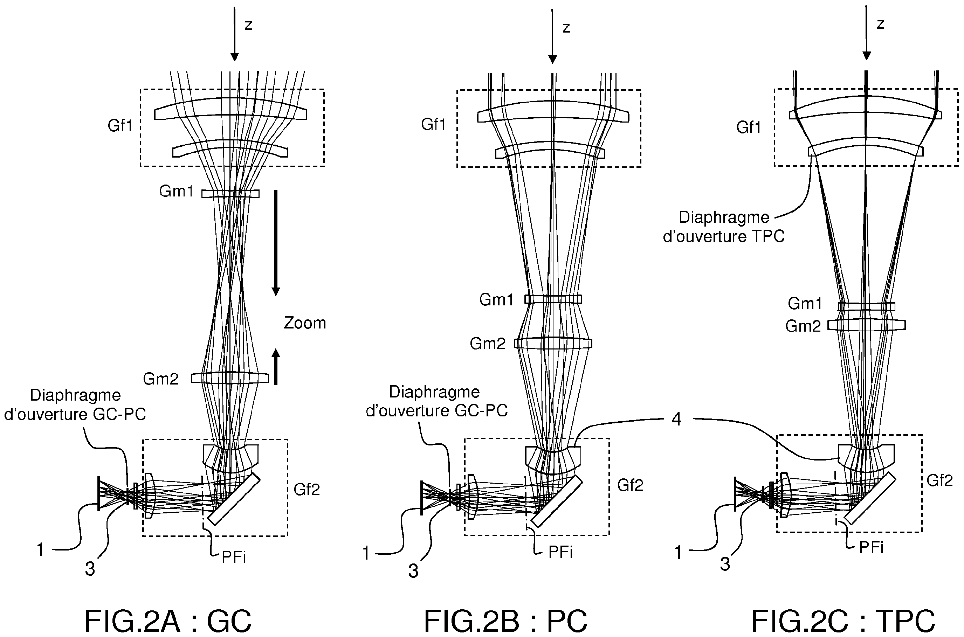

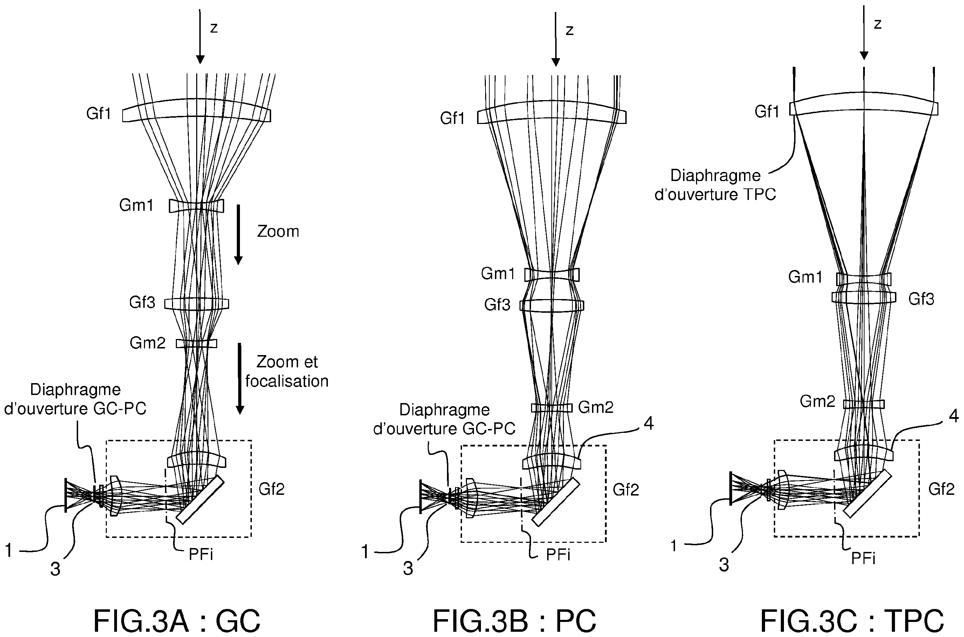

Comme montré dans les deux exemples des figures 2 et 3, le système d'imagerie IR selon l'invention comporte sur son axe optique z :
- un détecteur 1 matriciel à écran froid,
- un dispositif optique de formation d'image sur le détecteur, à focale continument variable de la configuration GC à la configuration PC et fonctionnant sans vignettage avec un nombre d'ouverture N constant. On note F la focale courante du zoom, F_{GC} sa focale en configuration GC, et F_{PC} sa focale en configuration PC.
- sur la plage continue GC-PC, un diaphragme d'ouverture situé au niveau du diaphragme froid 3 du cryostat afin d'optimiser la résolution thermique de mesure (ou NETD acronyme de l'expression anglo-saxonne « Noise Equivalent Temperature Différence ») du système. Plus rarement, le diaphragme d'ouverture est placé juste en amont du cryostat encapsulant le détecteur 1, et bordé par un miroir de réduction de flux de façon à retrouver une pseudo pupille froide, garante d'une photométrie saine. Dans les deux cas précités, le zoom fonctionne avec un très faible niveau de flux de structure, ce qui permet de maximiser les performances du système d'imagerie tout en facilitant les corrections des non-uniformités d'image. Si l'on parvient à maîtriser les variations du flux de structure résiduel (l'effet Narcisse, pour l'essentiel) en cours de zooming, il est possible de corriger les non-uniformités d'image induites, avec une seule table de gain valable pour toutes les focales de la plage GC-PC, et un nombre limité de tables d'offsets.

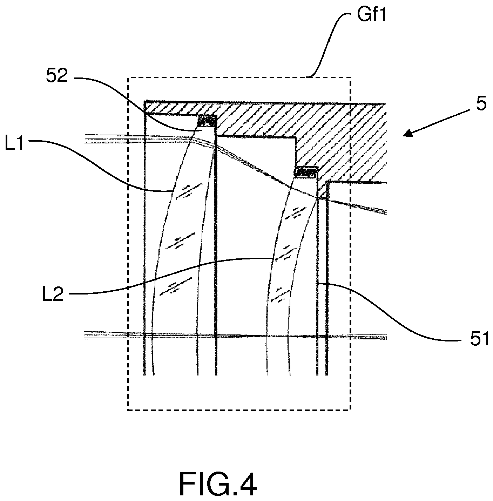

Le dispositif optique comprend dans l'ordre sur l'axe optique z :
- un groupe de tête Gf1 convergent de position fixe et de focale fixe F1 dont la ou les lentilles sont montées dans une mécanique de maintien 5 dont un exemple est montré figure 4 pour 2 lentilles,
- 2 groupes mobiles Gm1 et Gm2 positionnés pour assurer le changement continu de focale entre F_{GC} et F_{PC} et la focalisation de l'image sur le détecteur 1 (fonction focus),
- un groupe Gf2 de transport d'image de position fixe et de grandissement fixe gf2, apte à transporter la pupille dans l'espace d'entrée

Selon l'invention, le groupe de tête Gf1, qui a un fort impact sur le coût de l'optique, est dimensionné au plus juste de façon à laisser passer sans vignettage les faisceaux utiles du zoom continu GC-PC dans toutes les conditions thermiques, en tenant compte des imperfections de réalisation. Pour cela, les positions des pupilles d'entrée PC et GC ainsi que les aberrations pupillaires sont contraintes de façon à maintenir l'enveloppe des faisceaux utiles à l'intérieur d'un diamètre raisonnable, comparable au diamètre de la pupille d'entrée PC. A cet effet, le groupe Gf2 comporte généralement une lentille de champ. Typiquement, le diamètre de la lentille de tête est surdimensionné d'environ 10% à 20% par rapport au diamètre nominal de la pupille d'entrée PC.

Selon l'invention, le dispositif optique comporte en outre une configuration TPC de focale F_{TPC} prédéterminée. Partant de la configuration PC, le groupe Gm1 doit être éloigné du groupe Gf1 pour obtenir la focale F_{TPC}. La position du groupe Gm2 est également modifiée, de façon à maintenir la focalisation sur le détecteur. Le zoom continu GC-PC et la configuration TPC s'optimisent de façon couplée à l'aide d'un logiciel classique de conception optique.

En TPC, l'appui 51 d'une des lentilles du groupe de tête Gf1 (la lentille L2 dans l'exemple de la figure 4), joue le rôle de diaphragme d'ouverture, et l'ouverture numérique utile se trouve réduite par rapport à celle du zoom continu. Ainsi, en supposant que la lentille de tête de Gf1 est surdimensionnée d'environ 20% par rapport au diamètre de la pupille d'entrée du PC (afin de garantir l'absence de vignettage sur la totalité de la plage GC-PC), on obtient un nombre d'ouverture utile N_{TPC} qui vaut : N x (F_{TPC}/F_{PC}) / 1.2.

Comme le diamètre de l'enveloppe des faisceaux PC est voisin du diamètre de la pupille d'entrée PC, le diaphragme d'ouverture du TPC, localisé dans le bloc de tête, est naturellement imagé au voisinage du diaphragme froid, à + ou - quelques millimètres de celui-ci, à moins de 5 mm par exemple.

En fin de compte, en configuration TPC, le système fonctionne avec une proportion non négligeable de flux de structure, avec pour effet de dégrader la NETD, ce qui va à l'encontre des règles de conception habituelles des systèmes d'imagerie IR refroidis. Néanmoins, comme le seul diaphragme susceptible de vignetter les faisceaux utiles est proche de l'image de la pupille, le flux de structure ne présente que des variations spatiales basse-fréquence, si bien que les non-uniformités d'image induites peuvent être facilement compensées à l'aide d'une table de correction des gains pixels, et d'un nombre limité de tables de correction des offsets pixels.

En conséquence, le bénéfice est très largement positif : sans surcoût significatif par rapport à un zoom continu GC-PC, on dispose d'une configuration TPC intégrée, et photométriquement maîtrisée.

On va à présent décrire en détail deux exemples de système d'imagerie selon l'invention, mais la portée de l'invention ne se limite pas au descriptif détaillé qui suit. On se base sur un zoom continu 20°(GC) -3°(PC) avec TPC de 2°, adapté à un détecteur MWIR refroidi 1 comportant 640 x 480 éléments au pas de 15 µm. On suppose que le diaphragme froid 3 du cryostat ouvert à F/3.9, est situé à environ 11 mm du plan focal où est le détecteur 1.

Dans le premier exemple, le système d'imagerie selon l'invention décrit en relation avec les figures 2A, 2B et 2C, utilise un zoom avec deux groupes mobiles adjacents. Il comprend dans l'ordre selon l'axe optique z :
- Un groupe fixe Gf1 de focale F1, de type téléobjectif (a priori) avec par exemple deux lentilles, l'une convergente L1, l'autre divergente L2, monté sur une mécanique de maintien 5 montrée figure 4.
- Un groupe mobile Gm1 divergent jouant le rôle de variateur, qui travaille avec un grandissement gm1 variable, négatif.
- Un groupe mobile Gm2 convergent jouant le rôle de compensateur, qui travaille avec un grandissement gm2 variable, négatif également.
- Un groupe fixe Gf2 relayant jusqu'au détecteur 1 l'image intermédiaire réelle délivrée par les trois groupes Gf1, Gm1 et Gm2. Le groupe Gf2 travaille avec un grandissement gf2 fixe et négatif ; dans notre exemple il est voisin de -1.5, et plus généralement il est compris entre -2 et -1.

La pupille de sortie coïncide avec le diaphragme froid 3 du détecteur 1, qui joue le rôle de diaphragme d'ouverture du zoom sur la plage continue GC-PC. A l'aide d'une lentille de champ 4 placée à proximité du plan focal intermédiaire PFi présent dans le groupe Gf2, il est possible de contraindre la position de la pupille d'entrée du PC au voisinage du groupe Gf1, afin de minimiser les diamètres des composants de ce groupe, qui pèsent significativement sur le coût global du zoom. En GC, la pupille d'entrée est le plus souvent virtuelle.

On sait que F = F1. gm1. gm2. gf2. Le grandissement gf2 étant fixe, la variation de focale est obtenue par variation du produit gm1 gm2, qui est minimum en GC et maximum en TPC.

L'ensemble est optimisé de façon à ce qu'en PC, gm1. gm2 reste inférieur à environ 0.85. Cette condition rend possible l'utilisation du tandem variateur-compensateur en tant que groupe de focalisation pour la totalité de la plage continue GC-PC. En effet, la sensibilité axiale du tandem Gm1-Gm2, qui relie la défocalisation de l'image au déplacement axial de celui-ci, a pour expression [1 - (gm1 . gm2)²] (gf2)².

On en déduit que si le produit gm1 . gm2 est suffisamment éloigné de 1.0, alors un petit déplacement axial du tandem induit une défocalisation de l'image ; autrement dit le tandem peut jouer le rôle de groupe de focalisation rapprochée, et peut également servir à compenser les dérives thermiques de la combinaison. D'où l'intérêt.

En revanche, si le produit gm1. gm2 est très proche de 1.0, alors un déplacement axial du tandem Gm1-Gm2 n'induit pratiquement pas de défocalisation de l'image; dans ces conditions on ne peut pas utiliser les groupes mobiles Gm1 et Gm2 dédiés au zooming pour focaliser le zoom sur une scène rapprochée, ou pour l'athermalisation.

Avantageusement, la configuration TPC s'obtient en dépassant le point singulier en lequel gm1. gm2= 1.0. Comme F_{TPC}/F_{PC} est de l'ordre de 1.5, on a alors gm1. gm2> 1.2, ce qui permet d'utiliser le tandem en tant que groupe de focalisation, comme pour la plage continue GC-PC. Dans le cas présent on a gm1. gm2= 0.125 en GC, 0.833 en PC et 1.25 en TPC.

On décrit en relation avec les figures 3A, 3B et 3C, un deuxième exemple de système d'imagerie selon l'invention utilisant un zoom avec un groupe fixe entre les deux groupes mobiles. Le zoom comprend dans l'ordre sur l'axe optique z :
- Un groupe fixe Gf1 de focale F1 avec par exemple une seule lentille convergente.
- Un groupe mobile Gm1 divergent jouant le rôle de variateur, qui travaille avec un grandissement gm1 variable et négatif.
- Un groupe fixe Gf3 convergent, qui travaille avec un grandissement gf3 variable et négatif.
- Un groupe mobile Gm2 divergent jouant le rôle de compensateur, qui travaille avec un grandissement gm2 variable, négatif, et grand en valeur absolue (inférieur à -15, typiquement).
- Un groupe fixe Gf2 relayant jusqu'au détecteur 1 l'image intermédiaire délivrée par les quatre groupes Gf1, Gm1, Gf3 et Gm2 ; Gf2 travaille avec un grandissement gf2 constant, de faible valeur absolue généralement inférieure à 0.1, ce qui signifie que dans l'espace intermédiaire situé entre les groupes Gm2 et Gf2, les faisceaux sont presque collimatés.

Comme dans l'exemple précédent, sur la totalité de la plage continue GC-PC, la pupille de sortie coïncide avec le diaphragme froid du détecteur, qui joue par conséquent le rôle de diaphragme d'ouverture GC-PC du zoom. Afin de minimiser le diamètre de la lentille de tête (du groupe de tête), il est possible de contraindre la position de la pupille d'entrée du PC au voisinage de celle-ci, éventuellement à l'aide d'une lentille de champ 4 placée au voisinage du plan focal intermédiaire PFi dans le ré-imageur Gf2. En GC, la pupille d'entrée est le plus souvent virtuelle.

On a F = F1. gm1 .gf3. gm2. gf2. Le grandissement gf2 étant constant, la variation de focale est obtenue par variation du produit gm1. gf3.gm2, dont la valeur absolue est minimale en GC et maximale en TPC. Approximativement dans le cas présent, | gm1. gf3 .gm2 | = 4.0 en GC, et 40 en TPC.

En outre sur la plage GC-TPC, gm2 varie entre -17.5 et -19.4, et gf2 = 0.07, de sorte que le groupe compensateur Gm2 peut jouer le rôle de groupe de focalisation. En effet, la sensibilité axiale de Gm2 a pour expression [1 - (gm2)²] (gf2)². Compte-tenu des valeurs de gm2 et gf2 qui sont en jeu, cette sensibilité varie approximativement de 1.5 à 1.8 en valeur absolue, ce qui est largement compatible avec un pas élémentaire de déplacement de la classe 50 microns.

Dans ces deux exemples, le diaphragme d'ouverture du TPC est localisé dans le groupe de tête Gf1 qui est dimensionné par le besoin du PC. Il s'ensuit une diminution de l'ouverture utile du TPC par rapport au zoom continu GC-PC, d'un facteur inférieur au rapport F_{TPC}/F_{PC} car le groupe de tête doit laisser passer sans vignettage les faisceaux utiles du zoom continu dans toutes les conditions (thermiques et tolérances de réalisation), ce qui impose un léger surdimensionnement des composants par rapport au diamètre de la pupille d'entrée PC. Dans nos deux exemples, le diamètre de la lentille de tête est fixé à 60 mm, alors que le diamètre théorique de la pupille d'entrée du PC est de 46.9 mm. Ceci est mis à profit pour le TPC, qui peut disposer d'une pupille d'entrée d'environ 57 mm, en considérant une marge raisonnable de 1.5 mm du rayon entre le bord de la lentille et la zone utile optique. Cette marge 52 est montrée figure 4 entre le bord de la lentille L1 et la zone utile.

Enfin, l'image dans l'espace détecteur de ce diaphragme d'ouverture est localisée au voisinage du diaphragme froid du cryostat, afin qu'en TPC, seul ce diaphragme soit susceptible de vignetter légèrement les faisceaux utiles. Cette condition garantit des variations spatiales lentes du flux de structure en TPC.

## Revendications

1. Système d'imagerie passive IR qui comporte sur son axe optique (z) :
- un détecteur matriciel (1) placé dans un cryostat comportant un diaphragme froid (3),
- un dispositif optique de formation d'image sur le détecteur (1), à focale continument variable d'une configuration Grand Champ (GC) de focale F_{GC}, à une configuration Petit Champ (PC) de focale F_{PC}, avec dans la plage de focales une ouverture numérique constante et un diaphragme d'ouverture situé au niveau du diaphragme froid (3) du cryostat, comprenant :
o un groupe de tête (Gf1) de position fixe et de focale constante qui comprend au moins une lentille montée dans une mécanique de maintien (5), de diamètre déterminé par la configuration Petit Champ (PC),
∘ un premier (Gm1) et un second (Gm2) groupes mobiles aptes à être positionnés pour assurer le changement de focale entre F_{GC} et F_{PC} ainsi que la focalisation de l'image sur le détecteur (1),
∘ un groupe de transport d'image (Gf2) de position fixe et de grandissement constant, apte à imager le diaphragme d'ouverture afin de limiter le diamètre de l'enveloppe des faisceaux utiles Petit Champ sur les lentilles du groupe de tête Gf1,
**caractérisé en ce que** le dispositif optique comporte une configuration Très Petit Champ (TPC) de focale F_{TPC} prédéterminée, avec les premier et second groupes mobiles (Gm1, Gm2) positionnés pour obtenir la focale F_{TPC}, et un diaphragme d'ouverture pour la configuration Très Petit Champ (TPC) matérialisé dans la mécanique de maintien (5) du groupe de tête tel que l'image dans l'espace détecteur de ce diaphragme d'ouverture est localisée au voisinage du diaphragme froid du cryostat.

2. Système d'imagerie passive IR selon la revendication précédente, **caractérisé en ce que** les deux groupes mobiles (Gm1, Gm2) sont adjacents et **en ce que** le premier groupe mobile (Gm1) est divergent avec un grandissement variable négatif, et le second groupe mobile (Gm2) est convergent avec un grandissement variable négatif.

3. Système d'imagerie passive IR selon la revendication précédente, **caractérisé en ce que** la configuration Grand Champ (GC) correspond à 20°, la configuration Petit Champ (PC) à 3°, et la configuration Très Petit Champ (TPC) à 2°, et **en ce que** le produit des grandissements des premier et second groupes mobiles est supérieur à 1.2 en configuration Très Petit Champ (TPC), compris entre 0.8 et 0.85 en configuration Petit Champ (PC) et supérieur à 0.12 en configuration Grand Champ (GC).

4. Système d'imagerie passive IR selon la revendication 1, **caractérisé en ce qu'**il comporte un groupe fixe convergent (Gf3) avec un grandissement variable et négatif, situé entre les deux groupes mobiles (Gm1, Gm2) qui sont divergents et ont un grandissement variable négatif.

5. Système d'imagerie passive IR selon la revendication précédente, **caractérisé en ce que** la configuration Grand Champ (GC) correspond à 20°, la configuration Petit Champ (PC) à 3°, et la configuration Très Petit Champ (TPC) à 2°, et **en ce que** la valeur absolue du grandissement du groupe de transport d'image (Gf2) est inférieure à 0.1.

6. Caméra IR refroidie qui comporte un système d'imagerie passive IR selon l'une des revendications précédentes.

7. Jumelles IR refroidies qui comporte un système d'imagerie passive IR selon l'une des revendications 1 à 5.

## Patentansprüche

1. Passives IR-Bildgebungsverfahren, welches auf seiner optischen Achse (z) Folgendes beinhaltet:
- einen Matrixdetektor (1), platziert in einem Kryostaten, welcher eine kalte Blende (3) beinhaltet,
- eine optische Bilderzeugungsvorrichtung am Detektor (1), mit kontinuierlich variabler Brennweite mit einer Konfiguration mit großem Sichtfeld (GC) mit einer Brennweite F_{GC}, mit einer Konfiguration mit kleinem Sichtfeld (PC) mit einer Brennweite Fpc, mit einem Brennweitenbereich mit konstanter digitaler Öffnung und einer Öffnungsblende, welche auf Höhe der kalten Blende (3) des Kryostaten befindlich ist, Folgendes beinhaltend:
o eine Kopfgruppe (Gf1) mit fester Position und konstanter Brennweite, beinhaltend mindestens eine Linse, welche in einer Haltemechanik (5) montiert ist, deren Durchmesser durch die Konfiguration mit kleinem Sichtfeld (PC) bestimmt wird,
∘ eine erste (Gm1) und eine zweite (Gm2) mobile Gruppe, welche in der Lage sind, positioniert zu werden, um den Wechsel der Brennweite zwischen F_{GC} und F_{PC} sowie die Fokussierung des Bildes auf dem Detektor (1) zu gewährleisten,
∘ eine Bildtransportgruppe (Gf2) mit fester Position und konstanter Vergrößerung, welche in der Lage ist, die Öffnungsblende abzubilden, um den Durchmesser der Hülle der Nutzstrahlen für das kleine Sichtfeld auf den Linsen der Kopfgruppe Gf1 zu begrenzen,
**dadurch gekennzeichnet, dass** die optische Vorrichtung eine Konfiguration mit sehr kleinem Sichtfeld (TPC) mit einer vorbestimmten Brennweite F_{TPC} beinhaltet, wobei die erste und die zweite mobile Gruppe (Gm1, Gm2) positioniert sind, um die Brennweite F_{TPC} zu erzielen, und
eine Öffnungsblende für die Konfiguration mit sehr kleinem Sichtfeld (TPC), welche in der Haltemechanik (5) der Kopfgruppe so materialisiert ist, dass das Bild im Detektorraum dieser Öffnungsblende in der Nähe der kalten Blende des Kryostaten lokalisiert ist.

2. Passives IR-Bildgebungssystem nach dem vorhergehenden Anspruch, **dadurch gekennzeichnet, dass** die beiden mobilen Gruppen (Gm1, Gm2) benachbart sind und dadurch, dass die erste mobile Gruppe (Gm1) mit einer variablen negativen Vergrößerung divergiert, und die zweite mobile Gruppe (Gm2) mit einer variablen negativen Vergrößerung konvergiert.

3. Passives IR-Bildgebungssystem nach dem vorhergehenden Anspruch, **dadurch gekennzeichnet, dass** die Konfiguration mit großem Sichtfeld (GC) 20°, die Konfiguration mit kleinem Sichtfeld (PC) 3°, und die Konfiguration mit sehr kleinem Sichtfeld (TPC) 2° entspricht, und dadurch, dass das Produkt der Vergrößerungen der ersten und der zweiten mobilen Gruppe in der Konfiguration mit sehr kleinem Sichtfeld (TPC) 1,2 überschreitet, in der Konfiguration mit kleinem Sichtfeld (PC) zwischen 0,8 und 0,85 beträgt und in der Konfiguration mit großem Sichtfeld (GC) 0,12 überschreitet.

4. Passives IR-Bildgebungssystem nach Anspruch 1, **dadurch gekennzeichnet, dass** es eine feste konvergierende Gruppe (Gf3) mit einer variablen negativen Vergrößerung beinhaltet, welche zwischen den beiden mobilen Gruppen (Gm1, Gm2) befindlich ist, welche divergieren und eine variable negative Vergrößerung aufweisen.

5. Passives IR-Bildgebungssystem nach dem vorhergehenden Anspruch, **dadurch gekennzeichnet, dass** die Konfiguration mit großem Sichtfeld (GC) 20°, die Konfiguration mit kleinem Sichtfeld (PC) 3°, und die Konfiguration mit sehr kleinem Sichtfeld (TPC) 2° entspricht, und dadurch, dass der Absolutwert der Vergrößerung der Bildtransportgruppe (Gf2) 0,1 unterschreitet.

6. Gekühlte IR-Kamera, beinhaltend ein passives IR-Bildgebungssystem nach einem der vorhergehenden Ansprüche.

7. Gekühltes IR-Fernglas, beinhaltend ein passives IR-Bildgebungssystem nach einem der Ansprüche 1 bis 5.

## Claims

1. A passive IR imaging system comprising, on its optical axis (z):
- a matrix-array detector (1) placed in a cryostat comprising a cold diaphragm (3);
- an optical device for forming images on the detector (1), having a focal length that is continuously variable from a Large Field (GC) configuration of focal length F_{GC} to a Small Field (PC) configuration of focal length F_{PC}, with, in the range of focal lengths, a constant numerical aperture and an aperture diaphragm located at the cold diaphragm (3) of the cryostat, said optical device comprising:
∘ a head group (Gf1) with a fixed position and a constant focal length comprising at least one lens mounted in a mechanical holding means (5), with a diameter that is determined by the Small Field (PC) configuration;
∘ a first (Gm1) and a second (Gm2) movable group able to be positioned in order to ensure the change of focal length between F_{GC} and F_{PC} as well as to ensure that the image is focussed on the detector (1);
∘ an image-transport group (Gf2) with a fixed position and with constant magnification, able to image the aperture diaphragm in order to limit the diameter of the envelope of the Small Field useful beams on the lenses of the head group Gf1;
**characterised in that** the optical device comprises a Very Small Field (TPC) configuration of a predetermined focal length F_{TPC}, with the first and second movable groups (Gm1, Gm2) being positioned in order to obtain the focal length F_{TPC}; and
an aperture diaphragm for the Very Small Field (TPC) configuration implemented in the mechanical holding means (5) of the head group, such that the image in the detector space of this aperture diaphragm is located in the vicinity of the cold diaphragm of the cryostat.

2. The passive IR imaging system as claimed in the preceding claim, **characterised in that** the two movable groups (Gm1, Gm2) are adjacent and **in that** the first movable group (Gm1) is divergent with a negative variable magnification, and the second movable group (Gm2) is convergent with a negative variable magnification.

3. The passive IR imaging system as claimed in the preceding claim, **characterised in that** the Large Field (GC) configuration corresponds to 20°, the Small Field (PC) configuration corresponds to 3°, and the Very Small Field (TPC) configuration corresponds to 2°, and **in that** the product of the magnifications of the first and second movable groups is higher than 1.2 in the Very Small Field (TPC) configuration, ranges between 0.8 and 0.85 in the Small Field (PC) configuration and is higher than 0.12 in the Large Field (GC) configuration.

4. The passive IR imaging system as claimed in claim 1, **characterised in that** it comprises a convergent fixed group (Gf3) with a negative variable magnification, located between the two movable groups (Gm1, Gm2) that are divergent and have a negative variable magnification.

5. The passive IR imaging system as claimed in the preceding claim, **characterised in that** the Large Field (GC) configuration corresponds to 20°, the Small Field (PC) configuration corresponds to 3°, and the Very Small Field (TPC) configuration corresponds to 2°, and **in that** the absolute value of the magnification of the image-transport group (Gf2) is less than 0.1.

6. A cooled IR camera comprising a passive IR imaging system as claimed in one of the preceding claims.

7. A pair of cooled IR binoculars comprising a passive IR imaging system as claimed in one of claims 1 to 5.
